# EUROPÄISCHE PATENTSCHRIFT

(11) **EP 3 473 852 B1**
(45) Veröffentlichungstag und Bekanntmachung des Hinweises auf die Patenterteilung: **07.06.2023**
(21) Anmeldenummer: 18201467.0
(22) Anmeldetag: 19.10.2018
(51) Int. Cl.: F03D 7/04

(54) **STEUERUNGSSYSTEM UND VERFAHREN ZUM BETREIBEN EINER MEHRZAHL VON WINDENERGIEANLAGEN**
CONTROL SYSTEM AND A METHOD OF OPERATING A PLURALITY OF WIND TURBINES
SYSTÈME DE COMMANDE ET PROCÉDÉ DE FONCTIONNEMENT D'UN PLURALITÉ D'ÉOLIENNES

(30) Priorität: 23.10.2017 DE 102017009837
(43) Veröffentlichungstag der Anmeldung: 24.04.2019
(73) Patentinhaber: Siemens Gamesa Renewable Energy Service GmbH, 20097 Hamburg (DE)
(72) Erfinder: Geisler, Jens, 24768 Rendsburg (DE); Schmuck, Jesse Ben Benjamin, 24943 Flensburg (DE)
(74) Vertreter: Glawe, Delfs, Moll

(56) Entgegenhaltungen:
- EP-A1- 3 009 670
- CN-A- 106 779 201
- US-A1- 2007 124 025
- US-A1- 2013 300 115
- PURWADI AGUS ET AL: "Wind speed calculation by using electrical output and wind turbine power curve", 2013 INTERNATIONAL CONFERENCE ON INFORMATION TECHNOLOGY AND ELECTRICAL ENGINEERING (ICITEE), IEEE, 7 October 2013 (2013-10-07), pages 420-423, XP032526943, DOI: 10.1109/ICITEED.2013.6676279 ISBN: 978-1-4799-0423-5 [retrieved on 2013-11-26]

## Beschreibung

Die Erfindung betrifft ein Steuerungssystem und ein Verfahren zum Betreiben einer Mehrzahl von Windenergieanlagen.

In Windparks aus einer Mehrzahl von Windenergieanlagen stellt sich das Problem, dass abhängig von der Windrichtung einige Windenergieanlagen windaufwärts vor anderen Windenergieanlagen stehen. Windabwärts der vorderen Windenergieanlagen ergeben sich ungleichmäßige Windverhältnisse, durch die die windabwärts stehenden Windenergieanlagen einer erhöhten Belastung ausgesetzt sein können.

Ein Ansatz zur Verminderung der Lasten ist es, Änderungen der Windverhältnisse für die windabwärts angeordneten Windenergieanlagen vorherzusagen, sodass die Windenergieanlagen bereits vor Eintritt der geänderten Windverhältnisse in einen Zustand gebracht werden können, in dem die Belastung geringer ausfällt, WO 03/01 2293 A2, DE 10 2010 063 396 A1, WO 2013/083131.

Aus US 2007/0124025 A1 sind ein Verfahren und ein System zur Steuerung eines Windparkkraftwerks bekannt, das eine zentrale Verarbeitungs- und Steuereinheit umfasst, die mit den Windturbinen im Windpark gekoppelt ist, um Daten von jeder Windturbine zu empfangen und selektiv Daten und/oder Steuersignale an jede Windturbine zu senden, um Ermüdungslasten zu verringern und Leistungsgrenzen einzuhalten.

Für eine zuverlässige Vorhersage ist es regelmäßig nicht ausreichend, eine punktuelle Information über die aktuellen Windverhältnisse bei einer einzelnen windaufwärts angeordneten Windenergieanlage zu haben. Wünschenswert ist vielmehr eine flächige oder dreidimensionale Erfassung der aktuellen Windverhältnisse, um eine Vorhersage für zukünftige Zeitpunkte zu ermöglichen, EP 3 009 670 A1. Allerdings ist es nicht ganz einfach, eine präzise Information über die aktuellen Windverhältnisse zu gewinnen. Die Messwerte eines auf einer Windenergieanlage angeordneten Anemometers sind in aller Regel durch die Bewegung des Rotors verfälscht und deswegen nicht hinreichend verlässlich. Mit LIDAR-Sensoren ist es möglich, die Windverhältnisse windaufwärts einer Windenergieanlage zu vermessen und damit in einem Bereich, der nicht durch den Rotor gestört ist. Allerdings ist dies aufwendig und teuer. Ebenfalls aufwendig und teuer ist es, einen Windpark mit von den Windenergieanlagen separaten Sensoren auszustatten.

Der Erfindung liegt die Aufgabe zugrunde, ein Steuerungssystem und ein Verfahren zum Betreiben einer Mehrzahl von Windenergieanlagen vorzustellen, bei denen kostengünstig und zuverlässig die Belastung bestimmter Windenergieanlagen vermindert werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird aus Betriebsparametern einer ersten Windenergieanlage ein erster aktueller Windschätzwert abgeleitet. Aus Betriebsparametern einer zweiten Windenergieanlage wird ein zweiter aktueller Windschätzwert abgeleitet. Ein Prädiktionsmodell wird angewendet, um aus dem ersten aktuellen Windschätzwert und dem zweiten aktuellen Windschätzwert eine für einen zukünftigen Zeitpunkt gültige Windprädiktion für eine dritte Windenergieanlage abzuleiten. Die Windprädiktion wird in einer Steuerung verarbeitet, um ein vor dem zukünftigen Zeitpunkt wirksames Steuersignal für die dritte Windenergieanlage zu erzeugen. Das Prädiktionsmodell kann weitere Informationen außer dem ersten aktuellen Windschätzwert und dem zweiten aktuellen Windschätzwert verarbeiten. Das Prädiktionsmodell ermittelt bei einer Änderung der Windrichtung die Zeitspanne zwischen dem aktuellen Zeitpunkt und dem zukünftigen Zeitpunkt als Summe aus einer Verzögerungszeit, die aus der aktuellen Windgeschwindigkeit abgeleitet ist, und aus einer Zusatzzeit, die einen Nachlauf der ersten Windenergieanlage und/oder zweiten Windenergieanlage repräsentiert.

Die Erfindung hat erkannt, dass das angestrebte Ziel erst durch das Zusammenwirken mehrerer Aspekte erreicht werden kann. Das Verfahren basiert darauf, dass mit den Windschätzwerten für eine Mehrzahl von Windenergieanlagen eine zuverlässige Information über die aktuellen Windverhältnisse vorliegt. Es hat sich gezeigt, dass die aus Betriebsparametern der Windenergieanlage abgeleiteten Windschätzwerte deutlich weniger fehleranfällig sind, als beispielsweise die mit einem auf der Windenergieanlage angeordneten Anemometer aufgenommenen Messwert. Indem das Prädiktionsmodell mit Windschätzwerten gespeist wird, die die aktuellen Windverhältnisse bei mehreren Windenergieanlage repräsentieren, ergibt sich eine breite Informationsgrundlage, sodass sich aus dem Prädiktionsmodell eine verlässliche Windprädiktion ergibt. Die Windprädiktion betrifft die Windverhältnisse bei der dritten Windenergieanlage zu einem Zeitpunkt, der zeitlich nach dem aktuellen Zeitpunkt liegt (zukünftiger Zeitpunkt). Zwischen dem aktuellen Zeitpunkt, zu dem die Windschätzwerte ermittelt werden, und dem zukünftigen Zeitpunkt bleibt also eine Zeitspanne, innerhalb derer die Steuerung die Windprädiktion verarbeiten kann, um die dritte Windenergieanlage präventiv auf die kurze Zeit später zu erwartenden geänderten Windverhältnisse einzustellen (Vorsteuerung).

Das Steuersignal für die dritte Windenergieanlage kann in einer Steuerung der dritten Windenergieanlage erzeugt werden. Möglich ist auch, das Steuersignal in einer Steuerung einer anderen Windenergieanlage zu erzeugen oder in einer Steuerung des Windparks (Parkmaster), zu dem die dritte Windenergieanlage gehört.

Die gegenüber einer direkten Anemometer-Messung erhöhte Zuverlässigkeit der erfindungsgemäßen Windschätzwerte ergibt sich daraus, dass die Windschätzwerte aus der auf den gesamten Rotor wirkenden Luftmassenstrom abgeleitet werden. Im Vergleich zu einem auf der Windenergieanlage angeordneten Anemometer steht damit eine wesentlich größere Messfläche zur Verfügung. Die Betriebsparameter, aus denen ein Windschätzwert abgeleitet wird, sind so ausgewählt, dass es eine Abhängigkeit zwischen den Betriebsparametern und der auf den Rotor wirkenden Windlast gibt. Ändert sich also die auf den Rotor wirkende Windlast, so ergibt sich eine davon abhängige Änderung der Betriebsparameter. Als Betriebsparameter einer Windenergieanlage, die bei der Ermittlung eines Windschätzwerts berücksichtigt werden können, kommen beispielsweise in Betracht die Drehzahl des Rotors, der Pitchwinkel eines oder mehrerer Rotorblätter, das Drehmoment des Generators, eine Neigung des Turms und/oder die Verformung eines Rotorblatts. Weiterhin kann auch eine geschätzte oder messtechnisch ermittelte Luftdichte berücksichtigt werden. In die Ermittlung eines Windschätzwerts kann insbesondere eine Änderung einer dieser Größen einfließen.

Eine Verbesserung der Zuverlässigkeit der erfindungsgemäßen Windschätzwerte kann erreicht werden, indem die Windprädiktion für die dritte Windenergieanlage aus den aktuellen Windschätzwerten von mehreren Windenergieanlagen gewonnen wird. Je mehr Windschätzwerte in die Windprädiktion einfließen, desto genauer wird die Windprädiktion für die dritte Windenergieanlage.

Das Prädiktionsmodell kann so gestaltet sein, dass die Windprädiktion sich über einen geographischen Flächenabschnitt erstreckt, wobei die dritte Windenergieanlage innerhalb des geographischen Flächenabschnitts angeordnet ist. Aus dem Prädiktionsmodell kann dann für jeden Ort innerhalb des geographischen Flächenabschnitts eine Windprädiktion für einen zukünftigen Zeitpunkt abgeleitet werden. Das Prädiktionsmodell kann so gestaltet sein, dass die Windprädiktion an einem bestimmten Ort unabhängig von der Höhe über dem Erdboden einen festen Wert hat. Möglich ist auch eine dreidimensionale Gestaltung des Prädiktionsmodells, bei der sich die Windprädiktion nicht nur abhängig vom geographischen Ort, sondern auch abhängig von der Höhe über dem Erdboden ändert.

Das Prädiktionsmodell kann dazu ausgelegt sein, die Windprädiktion in ein Koordinatensystem abzubilden. Das Koordinatensystem kann dem geographischen Flächenabschnitt zugeordnet sein, über den sich die Windprädiktion erstreckt. Die geographische Position der dritten Windenergieanlage kann durch Koordinaten in dem Koordinatensystem definiert sein. Die Steuerung der dritten Windenergieanlage kann anhand dieser Koordinaten die für die dritte Windenergieanlage gültige Windprädiktion feststellen und daraus ein Steuersignal für die Windenergieanlage ableiten.

Die Windprädiktion umfasst vorzugsweise wenigstens einen Vorhersagewert für die Windrichtung und einen Vorhersagewert für die Windstärke. Die Windprädiktion kann weiter umfassen Vorhersagewerte für horizontale/vertikale Windgradienten, Turbulenzen und/oder die Luftdichte. Die für eine bestimmte geographische Position ermittelten Vorhersagewerte können einen zusammengehörigen Datensatz bilden. Außer der geographischen Position kann diesem Datensatz eine Zeitinformation zugeordnet werden, aus der sich ergibt, für welchen zukünftigen Zeitpunkt die Windprädiktion gültig ist.

Die Steuerung der dritten Windenergieanlage kann dazu ausgelegt sein, insbesondere dann ein Steuersignal aus der Windprädiktion abzuleiten, wenn die gemäß der Windprädiktion zu erwartende Belastung der dritten Windenergieanlage höher ist als die gegenwärtige Belastung der dritten Windenergieanlage. Das Steuersignal kann so gestaltet sein, dass es eine Verminderung der Leistungsaufnahme aus dem Wind bewirkt. Beispielsweise kann das Steuersignal den kollektiven Pitchwinkel, also den Pitchwinkel aller Rotorblätter vergrößern.

Je stärker das Steuersignal ist, desto deutlicher wird die Belastung der Windenergieanlage vermindert. Das Steuersignal kann desto stärker sein, je größer die Differenz zwischen der gegenwärtigen Windgeschwindigkeit bei der dritten Windenergieanlage und der mit der Windprädiktion vorhergesagten Windgeschwindigkeit ist. Dies gilt in erster Linie für den Fall, dass die vorhergesagte Windgeschwindigkeit größer ist als die gegenwärtige Windgeschwindigkeit. Die gegenwärtige Windgeschwindigkeit kann sich auf den Zeitpunkt beziehen, zu dem die Steuerung der dritten Windenergieanlage das Steuersignal erzeugt.

Zusätzlich oder alternativ dazu kann das Steuersignal desto stärker sein, je größer die Differenz zwischen der gegenwärtigen Turbulenzintensität bei der dritten Windenergieanlage und der mit der Windprädiktion vorhergesagten Turbulenzintensität ist. Die dritte Windenergieanlage ist dazu ausgelegt, die mit dem Steuerbefehl vorgegebene Änderung durchzuführen, also beispielsweise den kollektiven Pitchwinkel zu ändern.

Wird der Betriebszustand einer Windenergieanlage so verändert, dass sie geringeren Belastungen ausgesetzt ist, so sinkt regelmäßig auch die Leistungsaufnahme aus dem Wind. Um die Ertragsverluste gering zu halten, kann das Verfahren so eingerichtet sein, dass es nur dann aktiv ist, wenn die gegenwärtige Windgeschwindigkeit oberhalb der Nennwindgeschwindigkeit ist und/oder die dritte Windenergieanlage gegenwärtig bei Nennleistung betrieben wird. Bei einer Windgeschwindigkeit unterhalb der Nennwindgeschwindigkeit ist und/oder bei einem Betrieb der dritten Windenergieanlage unterhalb der Nennleistung kann das Verfahren inaktiv sein. Die gegenwärtige Windgeschwindigkeit kann die gegenwärtige Windgeschwindigkeit bei der dritten Windenergieanlage sein.

Für eine sinnvolle Durchführung des Verfahrens ist es von Vorteil, wenn die dritte Windenergieanlage windabwärts von der ersten Windenergieanlage und der zweiten Windenergieanlage angeordnet ist. Es gibt dann eine quer zur Windrichtung ausgerichtete Linie, von der aus gesehen die erste Windenergieanlage und die zweite Windenergieanlage windaufwärts angeordnet sind und die dritte Windenergieanlage windabwärts angeordnet ist. Die erste Windenergieanlage und die zweite Windenergieanlage können auf zwei Seiten einer von der dritten Windenergieanlage in Windrichtung gezogenen Geraden angeordnet sein.

Das Prädiktionsmodell kann eine Funktion umfassen, mit der eine Frontlinie eines Windfelds ermittelt wird. Frontlinie bezeichnet eine rechtwinklig zur Windrichtung ausgerichtete Linie, die sich mit Windgeschwindigkeit in Windrichtung bewegt. Eine solche Frontlinie ist eine einfache Möglichkeit, um die Ausbreitung der aus dem ersten Windschätzwert und dem zweiten Windschätzwert abgeleiteten aktuellen Werte für die Windgeschwindigkeit und die Windrichtung abzubilden. Unter Berücksichtigung des windaufwärts betrachteten Abstands von der dritten Windenergieanlage zu der Frontlinie sowie unter Berücksichtigung der Geschwindigkeit, mit der die Frontlinie sich in Windrichtung bewegt, kann eine Verzögerungszeit ermittelt werden, bis die durch die dritte Frontlinie abgebildeten Windbedingungen bei der dritten Windenergieanlage eintreffen. Aus der Verzögerungszeit ergibt sich unmittelbar der zugehörige zukünftige Zeitpunkt für die dritte Windenergieanlage, für den die Windprädiktion gilt.

Ist die für den zukünftigen Zeitpunkt vorhergesagte Windgeschwindigkeit höher als die gegenwärtige Windgeschwindigkeit bei der dritten Windenergieanlage, so kann kurz vor dem zukünftigen Zeitpunkt ein Steuersignal für die dritte Windenergieanlage erzeugt und verarbeitet werden, sodass die dritte Windenergieanlage weniger belastet wird. Insbesondere kann der kollektive Pitchwinkel durch eine solche Vorsteuerung präventiv vergrößert werden. Die Geschwindigkeit, mit der die Frontlinie sich bewegt, kann der aus dem ersten Schätzwert und dem zweiten Schätzwert ermittelten Windgeschwindigkeit entsprechen oder aus dieser Windgeschwindigkeit abgeleitet werden.

Mit einer solchen Frontlinie wird ein Prädiktionsmodell verwendet, mit dem die aus dem ersten Windschätzwert und/oder dem zweiten Windschätzwert ermittelten Windverhältnisse fortgeschrieben, insbesondere linear fortgeschrieben werden. In einer Ausführungsform der Erfindung wird zusätzlich oder alternativ dazu der Umstand berücksichtigt, dass auch die erste Windenergieanlage und die zweite Windenergieanlage selbst einen Einfluss auf die Windverhältnisse haben können, der für die dritte Windenergieanlage relevant ist. Mit anderen Worten ist das Prädiktionsmodell so gestaltet, dass bei der Ermittlung der Windprädiktion ein Nachlaufmodell einfließt, wobei das Nachlaufmodell den Nachlauf der ersten Windenergieanlage und/oder der zweiten Windenergieanlage repräsentiert.

Als Nachlauf wird ein windabwärts einer in Betrieb befindlichen Windenergieanlage angeordneter Raumbereich bezeichnet, in dem die Windverhältnisse anders sind, als sie es ohne die Anwesenheit der Windenergieanlage wären. Das erfindungsgemäße Prädiktionsmodell kann so ausgelegt sein, dass bei der Ermittlung der Windprädiktion ein Nachlaufmodell verwendet wird, gemäß dem im Nachlauf eine Windenergieanlage die Windgeschwindigkeit gegenüber ungestörten Windverhältnissen vermindert ist. Die Annahme einer verminderten Windgeschwindigkeit kann einen Raumbereich umfassen, der windabwärts von der ersten Windenergieanlage und/oder der zweiten Windenergieanlage angeordnet ist. Der Raumbereich kann zylinderförmig sein, wobei die Achse des Zylinders die Rotornabe schneiden kann. Der Durchmesser des Zylinders kann dem Rotordurchmesser entsprechen.

In einer Weiterbildung der Erfindung kann in dem Prädiktionsmodell berücksichtigt werden, dass der Nachlauf sich typischerweise nicht zylinderförmig an den Rotor anschließt, sondern sich mit zunehmendem Abstand von dem Rotor gegenüber dieser Zylinderform aufbereitet. Die Annahme einer verminderten Windgeschwindigkeit kann also einen Raumbereich umfassen, der sich windabwärts von der Windenergieanlage erstreckt und sich mit zunehmendem Abstand von der Windenergieanlage aufweitet. Die Aufwartung kann kegelförmig sein. Die Achse der Kegelform kann die Rotornabe schneiden. Der Durchmesser des Kegels im Bereich des Rotors kann dem Rotordurchmesser entsprechen.

Das Nachlaufmodell kann zusätzlich oder alternativ dazu so gestaltet sein, dass in einem windabwärts von der ersten Windenergieanlage und/oder der zweiten Windenergieanlage angeordneten Raumbereich von einer erhöhten Turbulenz ausgegangen wird. Der Raumbereich, in dem das Nachlaufmodell eine erhöhte Turbulenz annimmt, kann dem Raumbereich entsprechen, in dem das Nachlaufmodell eine verminderte Windgeschwindigkeit annimmt. Ist die für den zukünftigen Zeitpunkt vorhergesagte Turbulenz höher als die gegenwärtige Turbulenz bei der dritten Windenergieanlage, so kann kurz vor dem zukünftigen Zeitpunkt ein Steuersignal für die dritte Windenergieanlage erzeugt und verarbeitet werden, sodass die dritte Windenergieanlage weniger belastet wird. Beispielsweise kann der kollektive Pitchwinkel aller Rotorblätter durch eine solche Vorsteuerung präventiv vergrößert werden.

Das Prädiktionsmodell kann in einer einfachen Variante so ausgelegt sein, dass bei einer Änderung der Windrichtung eine lineare Fortschreibung angewendet wird. Dies bedeutet, dass die aus dem ersten Windschätzwert und dem zweiten Windschätzwert abgeleitete Frontlinie ihre Ausrichtung ändert. Die Geschwindigkeit, mit der die Frontlinie sich windabwärts bewegt, wird direkt aus der Windgeschwindigkeit gemäß dem ersten Windschätzwert und dem zweiten Windschätzwert abgeleitet. Aus dem windaufwärts betrachteten Abstand zwischen der dritten Windenergieanlage und der Frontlinie sowie aus der Geschwindigkeit, mit der die Frontlinie sich windabwärts bewegt, kann eine Verzögerungszeit berechnet werden und damit der zukünftige Zeitpunkt ermittelt werden, zu dem die geänderte Windrichtung bei der dritten Windenergieanlage eintrifft.

In einer Variante der Erfindung kann das Prädiktionsmodell so ausgebildet sein, dass in Bezug auf Änderungen der Windrichtung ein Nachlaufmodell Anwendung findet. Unter Berücksichtigung des Nachlaufmodells kann der zukünftige Zeitpunkt, zu dem eine Änderung der Windrichtung bei der dritten Windenergieanlage eintrifft, berechnet werden als Summe aus der linear ermittelten Verzögerungszeit und einer nachlaufbedingten Zusatzzeit. Es hat sich gezeigt, dass sich durch den Nachlauf eine zusätzliche Verzögerung ergibt, bis eine Änderung der Windrichtung sich zu einer windabwärts gelegenen Windenergieanlage fortgesetzt hat.

Die Berücksichtigung eines Nachlaufmodells in dem Prädiktionsmodell hat eigenständigen erfinderischen Gehalt, auch ohne dass aus Betriebsparametern einer ersten Windenergieanlage ein erster Windschätzwert abgeleitet wird, dass aus Betriebsparametern einer zweiten Windenergieanlage ein zweiter Windschätzwert abgeleitet wird und dass die Windprädiktion aus dem ersten Windschätzwert und dem zweiten Windschätzwert abgeleitet wird. Bei diesem Aspekt der Erfindung ist es also insbesondere möglich, dass die Produktion auf Basis von Windmesswerten anstatt von Windschätzwerten erfolgt. Außerdem ist es möglich, dass die Windprädiktion auf den aktuellen Windverhältnissen lediglich einer einzelnen Windenergieanlage beruht.

Das Verfahren kann so durchgeführt werden, dass aus den verfügbaren Windschätzwerten laufend eine Windprädiktion erstellt wird, die das gesamte geographische Gebiet des Windparks umfasst. Sind die Windprädiktionen jeweils mit Zeitstempeln versehen, so kann jede einzelne Windenergieanlage anhand ihrer geographischen Koordinaten und unter Auswahl des geeigneten Zeitstempel die für sie gültige Windprädiktion für einen zukünftigen Zeitpunkt ermitteln. Es ist möglich, eine Windprädiktion mit einem bestimmten Zeitstempel dynamisch zu aktualisieren, wenn neuere Windschätzwerte vorliegen. Hierfür ist es von Vorteil, wenn auf gespeicherte Windschätzwerte zugegriffen werden kann, die zu verschiedenen Zeitpunkten aufgenommen worden.

Möglich ist auch, dass die Windschätzwerte der beteiligten Windenergieanlagen gespeichert sind und dass die Windprädiktion und dass die gespeicherten Windschätzwerte verarbeiten werden, um eine Windprädiktion für den Standort einer Windenergieanlage zu erstellen. Auch bei dieser Vorgehensweise kann ein Prädiktionsmodell verwendet werden, das für einen größeren geographischen Bereich gültig ist.

Das Verfahren kann mit einer größeren Anzahl von Windenergieanlagen durchgeführt werden, wobei die bei einer ersten Gruppe von Windenergieanlagen gewonnenen Windschätzwerte verwendet werden, um für eine zweite Gruppe von Windenergieanlagen eine für einen zukünftigen Zeitpunkt geltende Windprädiktion zu erstellen. Das Verfahren kann so durchgeführt werden, dass in Abhängigkeit von dem zukünftigen Zeitpunkt, für den die Windprädiktion gültig ist, und/oder in Abhängigkeit von der Windrichtung die Zuordnung von Windenergieanlagen zu der ersten Gruppe und der zweiten Gruppe verändert wird.

Die größere Anzahl von Windenergieanlagen kann beispielsweise mindestens 10 Windenergieanlagen, vorzugsweise mindestens 20 Windenergieanlagen, weiter vorzugsweise mindestens 50 Windenergieanlagen umfassen. Die Mehrzahl von Windenergieanlagen kann zu einem Windpark zusammengeschlossen sein. Der Windpark kann eine zentrale Steuerung umfassen, die Vorgaben für den Betrieb einzelner Windenergieanlagen macht.

Für das Verfahren kann es von Vorteil sein, wenn für jede beteiligte Windenergieanlage eine Folge von Windschätzwerten gespeichert wird, die zu unterschiedlichen Zeitpunkten ermittelt wurden. Jeder der Windschätzwerte kann mit einem Zeitstempel versehen sein, sodass nachvollziehbar ist, zu welchem Zeitpunkt der Windschätzwert aufgenommen wurde. Der Zeitraum, über den sich die Folge von Windschätzwerten erstreckt, kann so bemessen sein, dass sie den Zeitraum umfasst, den ein Windfeld bei der niedrigsten zu betrachtenden Windgeschwindigkeit benötigt, um die größte Entfernung zwischen zwei beteiligten Windenergieanlagen zu überstreichen. Für die Speicherung der Daten kann ein Ringspeicher verwendet werden, in dem die Daten über die gewünschte Zeitspanne gespeichert werden und bei dem ältere Daten automatisch durch neu hinzugekommene Daten ersetzt werden.

Der Windschätzwert umfasst vorzugsweise einen Wert für die Windgeschwindigkeit und einen Wert für die Windrichtung. Diese Daten können zusammen mit dem zugehörigen Zeitstempel gespeichert werden. Außerdem kann zusammen mit dem Zeitstempel eine Information über den aktuellen Betriebsstatus der betreffenden Windenergieanlage gespeichert werden.

Die Berechnung der Windprädiktion kann auf einem Zentralrechner durchgeführt werden, der für eine Mehrzahl von beteiligten Windenergieanlagen zuständig ist. Möglich ist auch, die Berechnung der Windprädiktion dezentral mit einem Rechner einer Windenergieanlage durchzuführen.

Das Verfahren kann so durchgeführt werden, dass sich für jede Windenergieanlage, die windabwärts einer anderen Windenergieanlage des Windparks steht eine Windprädiktion für einen zukünftigen Zeitpunkt ergibt. Jede einzelne Windenergieanlage kann die für sie für einen bestimmten Zeitpunkt gültige Prädiktion bei Bedarf abfragen. Der zeitliche Abstand zwischen dem aktuellen Zeitpunkt, zu dem beispielsweise ein Windfeld bei den vordersten Windenergieanlagen des Windparks eintrifft, und dem zukünftigen Zeitpunkt, für den die Windprädiktion das Eintreffen der Böe für die hintersten Windenergieanlagen des Windparks vorhersagt, kann erheblich sein. Das Verfahren kann so durchgeführt werden, dass zwischen diesem aktuellen Zeitpunkt und diesen zukünftigen Zeitpunkt eine Aktualisierung der betreffenden Windprädiktion erfolgt, beispielsweise anhand von Windschätzwerten, die zwischenzeitlich an in der Mitte des Windparks angeordneten Windenergieanlagen gewonnen wurden.

Für die bezogen auf die Windrichtung vordersten Windenergieanlagen ist mit dem erfindungsgemäßen Verfahren keine Windprädiktion möglich. Die vordersten Windenergieanlagen sind demnach immer erste/zweite Windenergieanlagen im Sinne der Erfindung, bei denen Windschätzwerte ermittelt werden. Alle windabwärts von den vordersten Windenergieanlagen angeordneten Windenergieanlagen können dritte Windenergieanlagen im Sinne der Erfindung sein, für die eine Windprädiktion gemacht wird. Mittig Windenergieanlagen des Windparks, die sowohl windaufwärts als auch windabwärts von anderen Anlagen des Windparks stehen, können je nach zukünftigen Zeitpunkt, auf den sich die Windprädiktion bezieht, sowohl die Rolle einer ersten/zweiten Windenergieanlagen als auch die Rolle einer dritten Windenergieanlage im Sinne der Erfindung übernehmen.

Die Erfindung betrifft außerdem ein Steuerungssystem, mit einer Erfassungseinrichtung, die dazu ausgelegt ist, aus Betriebsparametern einer ersten Windenergieanlage einen ersten aktuellen Windschätzwert abzuleiten und aus Betriebsparametern einer zweiten Windenergieanlage einen zweiten aktuellen Windschätzwert abzuleiten, und mit einem Prädiktionsmodell, das dazu ausgelegt ist, aus dem ersten aktuellen Windschätzwert und dem zweiten aktuellen Windschätzwert eine für einen zukünftigen Zeitpunkt geltende Windprädiktion für eine dritte Windenergieanlage abzuleiten, wobei die Windprädiktion in dem Steuerungssystem verarbeitet wird, um ein vor dem zukünftigen Zeitpunkt wirksames Steuersignal für die dritte Windenergieanlage zu erzeugen. Die Erfindung betrifft außerdem eine Anordnung von Windenergieanlagen, die mit einem solchen Steuerungssystem ausgestattet ist.

In einer bevorzugten Ausführungsform weist das Steuerungssystem mehrere Steuerungsrechenanlagen auf. Die Windprädiktion wird dabei bevorzugt auf einer zentralen Rechenanlage für einen ganzen Windpark durchgeführt. Die jeweilige Windprädiktion für eine Einzelanlagen wird von der zentralen Rechenanlage auf die Steuereinheiten einer Mehrzahl von Einzelanlagen übermittelt. Die jeweiligen Steuereinheiten der Einzelanlagen erzeugen dann aus der übermittelten Windprädiktion die Steuersignale für die Einzelanlagen.

Das Steuerungssystem kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Steuerungssystems beschrieben sind.

Die Erfindung wird nachfolgend unter Bezugnahme auf die beigefügten Zeichnungen anhand vorteilhafter Ausführungsformen beispielhaft beschrieben. Es zeigen:
Fig. 1: eine erfindungsgemäße Anordnung von Windenergieanlagen;
Fig. 2: die Ansicht gemäß Fig. 1 bei einer anderen Ausführungsform der Erfindung;
Fig. 3: die Ansicht gemäß Fig. 1 bei einer weiteren Ausführungsform der Erfindung;
Fig. 4: eine alternative Ausführungsform der Erfindung;
Fig. 5: eine schematische Darstellung eines erfindungsgemäßen Steuerungssystems;
Fig. 6: eine schematische Darstellung einer alternativen Ausführungsform eines erfindungsgemäßen Steuerungssystems.

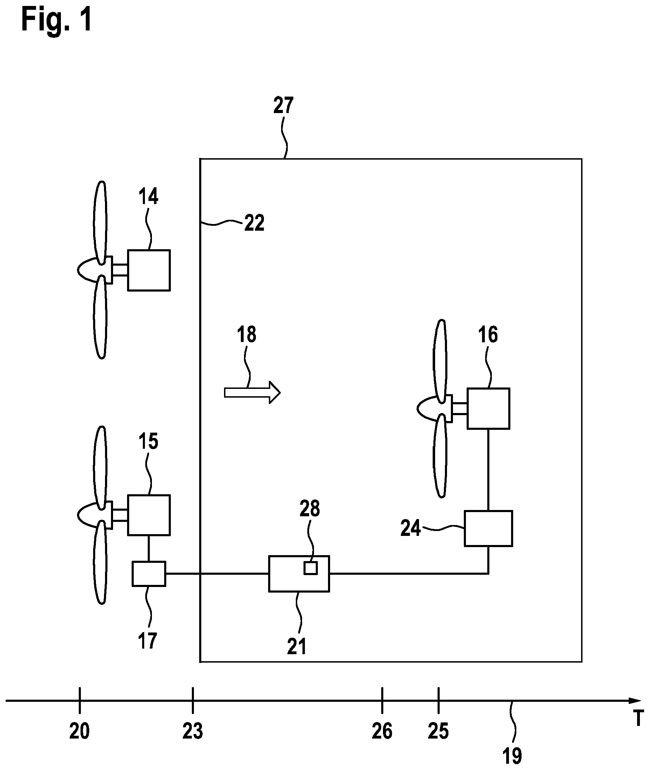

Ein in Fig. 1 gezeigter Windpark umfasst eine erste Windenergieanlage 14, eine zweite Windenergieanlage 15 und eine dritte Windenergieanlage 16. Jede Windenergieanlage 14, 15, 16 umfasst einen Rotor, der durch den Wind in Drehung versetzt wird und der einen Generator zur Erzeugung elektrischer Energie antreibt. Jede der Windenergieanlagen 14, 15, 16 umfasst außerdem einen Windschätzer 17, der in Fig. 1 nur am Beispiel der Windenergieanlage 15 dargestellt ist.

Die Windschätzer 17 sind dazu ausgelegt, für jede der Windenergieanlagen 14, 15, 16 einen Schätzwert für die Windgeschwindigkeit und gegebenenfalls auch für die Windrichtung zu ermitteln. Jeder Schätzwert wird abgeleitet von einem oder mehreren Betriebsparametern der betreffenden Windenergieanlage 14, 15, 16, die sich in Abhängigkeit von dem auf den gesamten Rotor wirkenden Luftmassenstrom ändern. Diese Betriebsparameter können beispielsweise die Drehzahl des Rotors, den Pitchwinkel der Rotorblätter, das von dem Rotor aufgebrachte Drehmoment und/oder eine Verformung eines oder mehrerer Rotorblätter umfassen. Da der Rotor eine große Fläche überstreicht, lassen sich mit dem Windschätzwert 17 zuverlässige Werte für die effektive Windgeschwindigkeit und die optional auch für die Windrichtung schätzen. Möglich ist auch, dass die Windrichtung mit einer aus dem Stand der Technik bekannten Windrichtungssensorik gemessen wird.

Bei der in Fig. 1 herrschenden Windrichtung 18 ist die dritte Windenergieanlage 16 windabwärts von der ersten Windenergieanlage 14 und der zweiten Windenergieanlage 15 angeordnet. Der in Windrichtung betrachtete Abstand zwischen der dritten Windenergieanlage 16 und den Windenergieanlagen 14, 15 ist so, dass die dritte Windenergieanlage 16 im Nachlauf der Windenergieanlagen 14, 15 angeordnet ist. Bei der Windrichtung 18 sind die Windverhältnisse, die die dritte Windenergieanlage 16 erfährt also durch den Betrieb der vorderen Windenergieanlagen 14, 15 beeinflusst.

Auf der Zeitachse 19 in Fig. 1 werden zum aktuellen Zeitpunkt 20 Windschätzwerte an der ersten Windenergieanlage 14 und der zweiten Windenergieanlage 15 ermittelt. Die Windschätzwerte werden zu einem Prädiktionsrechner 21 geleitet, in dem ein Prädiktionsmodell 28 hinterlegt ist. Die Windschätzwerte werden in das Prädiktionsmodell 28 eingespeist, das die Windschätzwerte verarbeitet, um eine einen zukünftigen Zeitpunkt betreffende Windprädiktion zu ermitteln.

Die Windprädiktion umfasst eine Frontlinie 22 eines Windfelds. Zum Zeitpunkt 23, zu dem die Berechnung der Windprädiktion abgeschlossen ist, ist die Frontlinie 22 bereits etwas hinter den Windenergieanlagen 14, 15 angeordnet. Die Frontlinie 22 ist gemäß dem Prädiktionsmodell 28 quer zur Windrichtung 18 ausgerichtet und bewegt sich mit der aus den Windschätzwerten abgeleiteten Windgeschwindigkeit in Richtung der dritten Windenergieanlage 16.

Eine Steuereinheit 24 der dritten Windenergieanlage 16 kann ab dem Zeitpunkt 23 bei dem Prädiktionsrechner 21 eine für einen zukünftigen Zeitpunkt 25 gültige Windprädiktion für den Standort der dritten Windenergieanlage 16 abfragen. Sobald der Zeitpunkt 25 näher gerückt ist, kann die Steuereinheit 24 der dritten Windenergieanlage 16 die für den Zeitpunkt 25 gültige Windprädiktion mit dem gegenwärtigen Windschätzwert der dritten Windenergieanlage 16 vergleichen. Ist die Windstärke gemäß der Windprädiktion deutlich größer als der gegenwärtige Windschätzwert, so kann die Steuereinheit 24 ein Steuersignal erzeugen, sodass zu einem zu einem Zeitpunkt 26, der kurz vor dem Zeitpunkt 25 liegt, der kollektive Pitchwinkel der dritten Windenergieanlage 16 vergrößert wird. Die dritte Windenergieanlage 16 wird also im Wege einer Vorsteuerung präventiv in einen Zustand gebracht, in dem sie durch die kurz darauf eintreffende Windböe nur wenig belastet wird.

Die mit dem Prädiktionsrechner 21 ermittelte Windprädiktion erstreckt sich über einen geographischen Bereich 27, innerhalb dessen die dritte Windenergieanlage 16 angeordnet ist. Bei dem Prädiktionsrechner 21 kann für jeden Ort innerhalb des geographischen Bereichs 27 für einen bestimmten Zeitpunkt eine Windprädiktion abgefragt werden. Es sendet also beispielsweise die dritte Windenergieanlage 16 zusammen mit ihren geographischen Koordinaten eine Anfrage an den Prädiktionsrechner 21 und erhält als Antwort eine Windprädiktion für den zukünftigen Zeitpunkt 25.

Die Windprädiktion umfasst einen Vorhersagewert für die Windrichtung und einen Vorhersagewert für die Windgeschwindigkeit. Je größer die vorhergesagte Windgeschwindigkeit im Vergleich mit der gegenwärtigen Windgeschwindigkeit ist, desto stärker kann der Pitchwinkel im Wege der Vorsteuerung vergrößert werden. Die Windprädiktion kann ferner einen Vorhersagewert für die Turbulenzintensität umfassen. Je größer die vorhergesagte Turbulenzintensität im Vergleich mit dem gegenwärtigen Turbulenzwert ist, desto stärker kann der Pitchwinkel präventiv vergrößert werden.

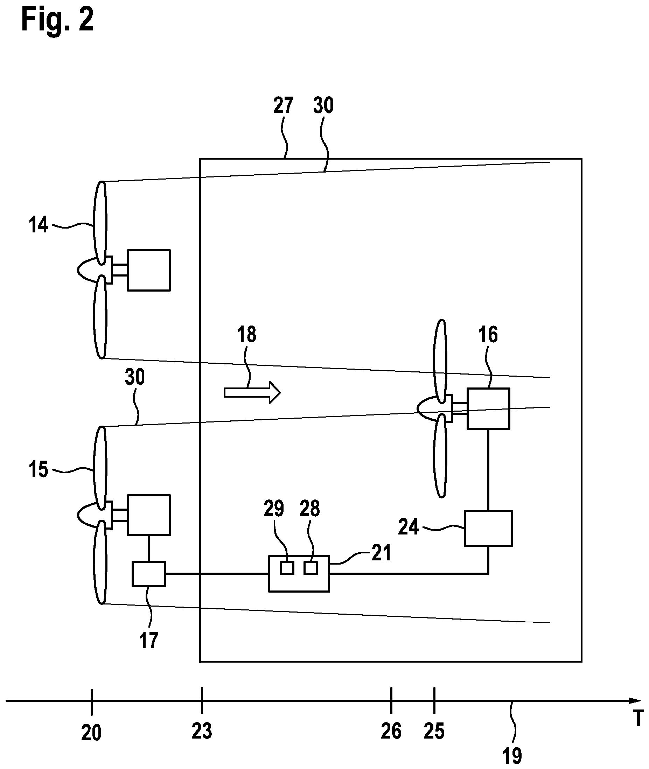

Bei dem Ausführungsbeispiel gemäß Fig. 2 umfasst das Prädiktionsmodell 28 ein Nachlaufmodell 29. Durch das Nachlaufmodell 29 kann der Umstand berücksichtigt werden, dass im Nachlauf 30 der Windenergieanlagen 14, 15 die Windgeschwindigkeit vermindert ist verglichen mit einem ungestörten Windfeld. Der Nachlauf 30 beginnt gemäß der Abbildung im Nachlaufmodell in der Ebene der Rotoren der Windenergieanlagen 14, 15 und setzt sich in Windrichtung fort, wobei der Nachlauf sich mit zunehmendem Abstand von den Rotoren im Querschnitt vergrößert.

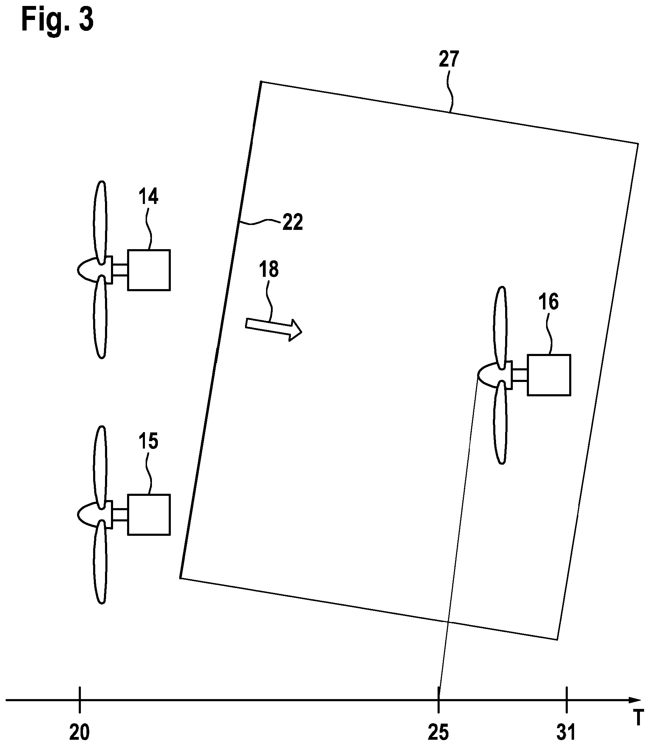

In Fig. 3 ist eine Variante eines erfindungsgemäßen Windparks gezeigt, bei der das Prädiktionsmodell 28 ebenfalls ein Nachlaufmodell 29 umfasst. Zum Zeitpunkt 20 zeigen die von den Windenergieanlagen 14, 15 ermittelten Windschätzwerte eine Änderung der Windrichtung an. Die Windenergieanlagen 14, 15 konnten als in Windrichtung vorderste Anlagen nicht präventiv auf die Änderung der Windrichtung reagieren und blicken noch in Richtung der vorherigen Windrichtung.

Mit dem Prädiktionsmodell 28 ergibt sich eine Frontlinie 22, die rechtwinklig zur neuen Windrichtung 18 ausgerichtet ist. Bei linearer Fortschreibung der Frontlinie 22 entsprechend der Windgeschwindigkeit würde das neue Windfeld zum zukünftigen Zeitpunkt 25 bei der dritten Windenergieanlage 16 ankommen. Mit dem Nachlaufmodell 29 wird berücksichtigt, dass sich durch den Nachlauf eine Verzögerung ergibt, bis die geänderte Windrichtung bei der dritten Windenergieanlage 16 ankommt. Gemäß dem Prädiktionsmodell 28 trifft die geänderte Windrichtung erst zum späteren Zeitpunkt 31 bei der Windenergieanlage 16 ein. Die Zeitspanne zwischen dem zukünftigen Zeitpunkt 25 und dem zukünftigen Zeitpunkt 31 wird als nachlaufbedingte Zusatzzeit bezeichnet.

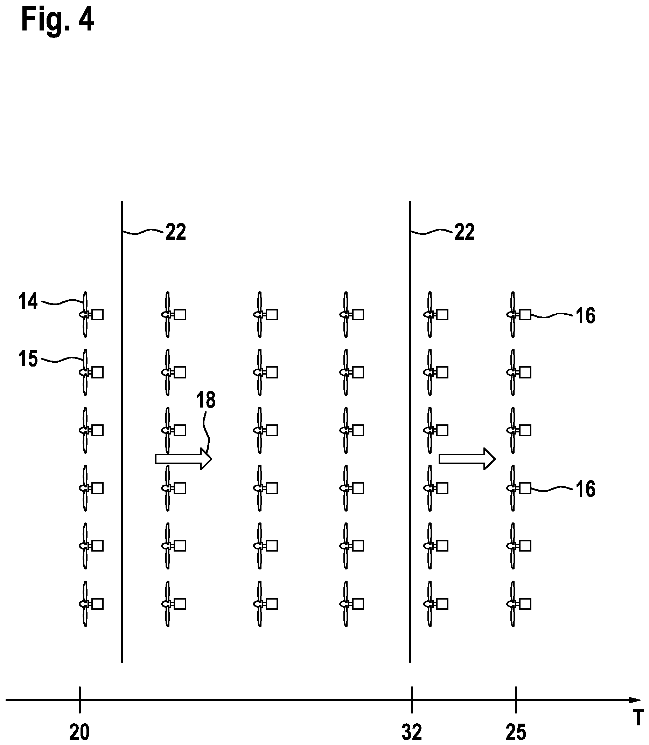

Bei der Ausführungsform gemäß Fig. 4 umfasst der Windpark eine größere Anzahl von Windenergieanlagen. Die in Windrichtung vordersten Anlagen des Windparks sind erste und zweite Windenergieanlagen 14, 15 im Sinne der Erfindung. Werden zu einem aktuellen Zeitpunkt 20 Windschätzwerte bei den vordersten Windenergieanlagen 14, 15 gewonnen, so ergibt sich daraus eine Windprädiktion für die hintersten (dritten) Windenergieanlagen 16 des Windparks, die für den zukünftigen Zeitpunkt 25 gültig ist.

Eine Windprädiktion, die auf den zum Zeitpunkt 20 gewonnenen Windschätzwerten beruht, kann alle Windenergieanlagen umfassen, die zwischen den vordersten Windenergieanlagen 14, 15 und den hintersten Windenergieanlagen 16 angeordnet sind. Zu einem Zwischenzeitpunkt 32 kann bereits zusätzlich auf Windschätzwerte von den weiteren Windenergieanlagen zurückgegriffen werden, über die das Windfeld inzwischen hinweggestrichen ist. Die zum Zwischenzeitpunkt 32 dynamisch aktualisierte Windprädiktion für den Zeitpunkt 25 für die hintersten Windenergieanlagen 16 beruht auf einer breiteren Datenbasis, woraus sich eine erhöhte Zuverlässigkeit der Windprädiktion ergibt.

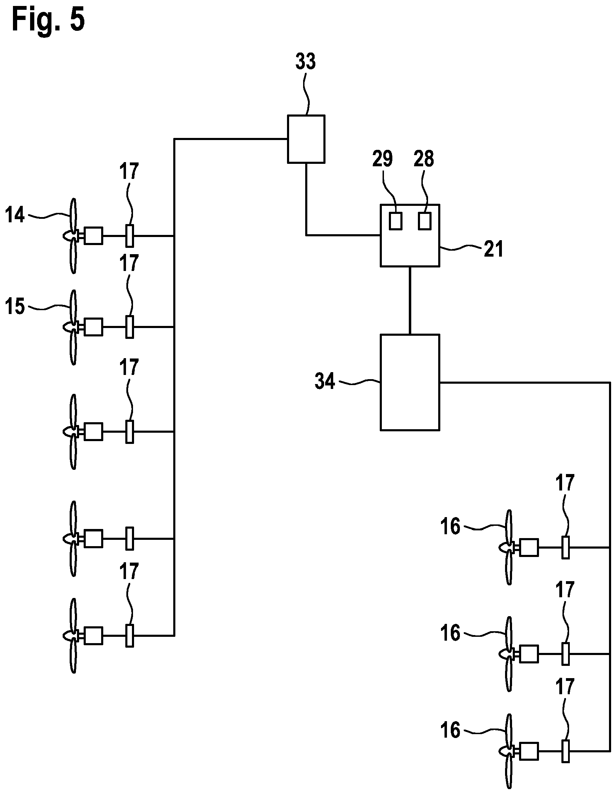

Bei dem in Fig. 5 schematisch dargestellten Windpark sind die vorderen Windenergieanlagen 14, 15, mit deren Windschätzwerten die Windprädiktion erstellt wird, getrennt dargestellt von den hinteren Windenergieanlagen 16, für die die Windprädiktion gilt. Welche der Windenergieanlagen des Windparks zu welcher der beiden Gruppen gehören, ändert sich in Abhängigkeit von der Windrichtung und in Abhängigkeit davon, für welche Windenergieanlagen die Windprädiktion Gültigkeit haben soll. Alle Windenergieanlagen 14, 15, 16 sind mit Windschätzern 17 ausgestattet, die Windschätzwerte an einen zentralen Speicher 33 senden. In dem zentralen Speicher 33 werden die Windschätzwerte zusammen mit den geographischen Koordinaten der jeweiligen Windenergieanlage und einem zugehörigen Zeitstempel gespeichert. Ergänzend dazu kann jeweils eine Information über den Betriebszustand der betreffenden Windenergieanlage zu dem betreffenden Zeitpunkt gespeichert werden.

In dem Speicher 33 werden die Daten so lange gespeichert, wie das langsamste zu betrachtende Windfeld benötigt, um sich über die größte Ausdehnung des Windparks zu bewegen. Das langsamste zu betrachtende Windfeld kann beispielsweise eine der Einschaltgeschwindigkeit der Windenergieanlagen entsprechende Geschwindigkeit haben. Der Speicher 33 ist als Ringspeicher ausgebildet, sodass die ältesten Daten dieses Zeitraums jeweils durch neuere Daten ersetzt werden.

Ein zentraler Prädiktionsrechner 21 greift auf die in dem Speicher 33 hinterlegten Windschätzwerte zu, um fortlaufend Windprädiktionen zu entwickeln, die für den Windpark zu unterschiedlichen Zeitpunkten gültig sind. Die Windprädiktionen werden in einem zweiten Speicher 34 abgelegt. Jede der Windenergieanlagen 16 kann auf den zweiten Speicher 34 zugreifen und die für ihre geographischen Koordinaten und für einen bestimmten zukünftigen Zeitpunkt geltende Windprädiktion abfragen.

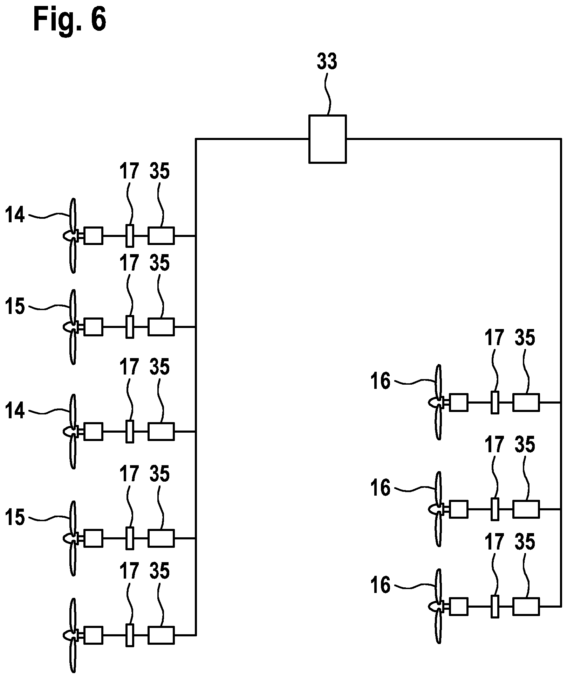

In Fig. 6 ist eine Ausführungsform gezeigt, bei der die Windschätzwerte aller Windenergieanlagen 14, 15, 16 in einem zentralen Speicher 33 gespeichert werden. Jede Windenergieanlage 14, 15, 16 ist mit einem dezentralen Prädiktionsrechner 35 ausgestattet, der auf die Windschätzwerte in dem Speicher 33 zugreift, um eine nur für die betreffende Windenergieanlage gültige Windprädiktion für eine zukünftigen Zeitpunkt zu erstellen. Die Berechnung kann anhand eines Prädiktionsmodells 28 erfolgen, das für einen größeren geographischen Bereich Gültigkeit hat.

Der dezentrale Prädiktionsrechner 35 kann so eingerichtet sein, dass er selektiv nur auf diejenigen Windschätzwerte in dem Speicher 33 zugreift, die für die betreffende Windenergieanlage relevant sind. Dies sind diejenigen Windenergieanlagen, die windaufwärts der betreffenden Windenergieanlage stehen, und insbesondere diejenigen Windenergieanlagen, deren Nachlauf auf die betreffende Windenergieanlage einwirkt.

## Patentansprüche

1. Verfahren zum Betreiben einer Mehrzahl von Windenergieanlagen (14, 15, 16), bei dem aus Betriebsparametern einer ersten Windenergieanlage (14) ein erster aktueller Windschätzwert abgeleitet wird und bei dem aus Betriebsparametern einer zweiten Windenergieanlage (15) ein zweiter aktueller Windschätzwert abgeleitet wird, wobei ein Prädiktionsmodell (28) angewendet wird, um aus dem ersten Windschätzwert und dem zweiten Windschätzwert eine für einen zukünftigen Zeitpunkt (25) geltende Windprädiktion für eine dritte Windenergieanlage (16) abzuleiten, wobei die Windprädiktion in einer Steuerung (24) verarbeitet wird, um ein vor dem zukünftigen Zeitpunkt (25) wirksames Steuersignal für die dritte Windenergieanlage (16) zu erzeugen, und wobei das Prädiktionsmodell (28) bei einer Änderung der Windrichtung die Zeitspanne zwischen dem aktuellen Zeitpunkt und dem zukünftigen Zeitpunkt ermittelt als Summe aus einer Verzögerungszeit, die aus der aktuellen Windgeschwindigkeit abgeleitet ist, und aus einer Zusatzzeit, die einen Nachlauf der ersten Windenergieanlage (14) und/oder zweiten Windenergieanlage (15) repräsentiert.

2. Verfahren nach Anspruch 1, **dadurch gekennzeichnet, dass** das Prädiktionsmodell die Windprädiktion in ein geographisches Koordinatensystem abbildet.

3. Verfahren nach Anspruch 2, **dadurch gekennzeichnet, dass** der Standort der dritten Windenergieanlage (16) durch Koordinaten innerhalb des geographischen Koordinatensystems definiert ist.

4. Verfahren nach einem der Ansprüche 1 bis 3, **dadurch gekennzeichnet, dass** das Steuersignal eine verminderte Leistungsaufnahme der dritten Windenergieanlage (16) aus dem Wind bewirkt.

5. Verfahren nach einem der Ansprüche 1 bis 4, **dadurch gekennzeichnet, dass** das Verfahren nur dann aktiv ist, wenn die gegenwärtige Windgeschwindigkeit oberhalb der Nennwindgeschwindigkeit ist und/oder die dritte Windenergieanlage (16) gegenwärtig bei Nennleistung betrieben wird.

6. Verfahren nach einem der Ansprüche 1 bis 5, **dadurch gekennzeichnet, dass** das Prädiktionsmodell (28) die Geschwindigkeit, mit der eine Frontlinie (22) eines Windfelds sich an die dritte Windenergieanlage annähert aus dem ersten Windschätzwert und/oder aus dem zweiten Windschätzwert ableitet.

7. Verfahren nach einem der Ansprüche 1 bis 6, **dadurch gekennzeichnet, dass** das Prädiktionsmodell (28) ein Nachlaufmodell (29) umfasst, gemäß dem der Nachlauf (30) sich mit zunehmendem Abstand von der Windenergieanlage (14, 15) aufweitet.

8. Verfahren nach einem der Ansprüche 1 bis 7, **dadurch gekennzeichnet, dass** es mit einer größeren Anzahl von Windenergieanlagen (14, 15, 16) durchgeführt wird.

9. Verfahren nach einem der Ansprüche 1 bis 8, **dadurch gekennzeichnet, dass** für jede beteiligte Windenergieanlage (14, 15, 16) eine Folge von Windschätzwerten gespeichert wird, die zu unterschiedlichen Zeitpunkten ermittelt wurden.

10. Verfahren nach Anspruch 8 oder 9, **dadurch gekennzeichnet, dass** die bei einer ersten Gruppe von Windenergieanlagen (14, 15) gewonnenen Windschätzwerte verwendet werden, um für eine zweite Gruppe von Windenergieanlagen (16) eine für einen zukünftigen Zeitpunkt (25) geltende Windprädiktion zu erstellen.

11. Verfahren nach Anspruch 10, **dadurch gekennzeichnet, dass** die Zuordnung einer Windenergieanlage zu der ersten Gruppe bzw. der zweiten Gruppe verändert wird in Abhängigkeit von der Windrichtung (18) und/oder in Abhängigkeit von dem zukünftigen Zeitpunkt (25), für den die Windprädiktion gilt.

12. Steuerungssystem, mit einer Erfassungseinrichtung, die dazu ausgelegt ist, aus Betriebsparametern einer ersten Windenergieanlage (14) einen ersten aktuellen Windschätzwert abzuleiten und aus Betriebsparametern einer zweiten Windenergieanlage (15) einen zweiten aktuellen Windschätzwert abzuleiten, und mit einem Prädiktionsmodell, das dazu ausgelegt ist, aus dem ersten aktuellen Windschätzwert und dem zweiten aktuellen Windschätzwert eine für einen zukünftigen Zeitpunkt (25) geltende Windprädiktion für eine dritte Windenergieanlage (16) abzuleiten, **dadurch gekennzeichnet, dass** bei einer Änderung der Windrichtung die Zeitspanne zwischen dem aktuellen Zeitpunkt und dem zukünftigen Zeitpunkt ermittelt wird als Summe aus einer Verzögerungszeit, die aus der aktuellen Windgeschwindigkeit abgeleitet ist, und aus einer Zusatzzeit, die einen Nachlauf der ersten Windenergieanlage (14) und/oder zweiten Windenergieanlage (15) repräsentiert, wobei die Windprädiktion in dem Steuerungssystem (21, 24) verarbeitet wird, um ein vor dem zukünftigen Zeitpunkt (25) wirksames Steuersignal für die dritte Windenergieanlage (16) zu erzeugen.

## Claims

1. Method for operating a plurality of wind turbines (14, 15, 16), in which a first current estimated wind value is derived from operating parameters of a first wind turbine (14) and in which a second current estimated wind value is derived from operating parameters of a second wind turbine (15), wherein a prediction model (28) is applied in order to derive, from the first estimated wind value and the second estimated wind value, a wind prediction, applicable to a future point in time (25), for a third wind turbine (16), wherein the wind prediction is processed in a controller (24) in order to generate a control signal for the third wind turbine (16) that takes effect before the future point in time (25), and wherein, in the case of a change in the wind direction, the prediction model (28) determines the time span between the current point in time and the future point in time as the sum of a delay time, which is derived from the current wind speed, and of an additional time, which represents a wake of the first wind turbine (14) and/or second wind turbine (15).

2. Method according to Claim 1, **characterized in that** the prediction model maps the wind prediction into a geographical coordinate system.

3. Method according to Claim 2, **characterized in that** the location of the third wind turbine (16) is defined by coordinates within the geographical coordinate system.

4. Method according to one of Claims 1 to 3, **characterized in that** the control signal causes a reduction in the power drawn from the wind by the third wind turbine (16) .

5. Method according to one of Claims 1 to 4, **characterized in that** the method is active only when the present wind speed is above the nominal wind speed and/or the third wind turbine (16) is presently being operated at nominal output.

6. Method according to one of Claims 1 to 5, **characterized in that** the speed at which a front line (22) of a wind field is approaching the third wind turbine is derived by the prediction model (28) from the first estimated wind value and/or from the second estimated wind value.

7. Method according to one of Claims 1 to 6, **characterized in that** the prediction model (28) comprises a wake model (29), according to which the wake (30) widens as the distance from the wind turbine (14, 15) increases.

8. Method according to one of Claims 1 to 7, **characterized in that** it is carried out with a greater number of wind turbines (14, 15, 16).

9. Method according to one of Claims 1 to 8, **characterized in that** a sequence of estimated wind values, which have been determined at different points in time, is stored for each participating wind turbine (14, 15, 16).

10. Method according to Claim 8 or 9, **characterized in that** the estimated wind values obtained in the case of a first group of wind turbines (14, 15) are used in order to compile a wind prediction, applicable to a future point in time (25), for a second group of wind turbines (16) .

11. Method according to Claim 10, **characterized in that** the assignment of a wind turbine to the first group or to the second group is altered in dependence on the wind direction (18) and/or in dependence on the future point in time (25) to which the wind prediction is applicable.

12. Control system, having an acquisition device which is designed to derive a first current estimated wind value from operating parameters of a first wind turbine (14) and to derive a second current estimated wind value from operating parameters of a second wind turbine (15), and having a prediction model which is designed to derive, from the first current estimated wind value and the second current estimated wind value, a wind prediction, applicable to a future point in time (25), for a third wind turbine (16), **characterized in that**, in the case of a change in the wind direction, the time span between the current point in time and the future point in time is determined as the sum of a delay time, which is derived from the current wind speed, and of an additional time, which represents a wake of the first wind turbine (14) and/or second wind turbine (15), wherein the wind prediction is processed in the control system (21, 24) in order to generate a control signal for the third wind turbine (16) that takes effect before the future point in time (25).

## Revendications

1. Procédé pour faire fonctionner une pluralité d'aérogénérateurs (14, 15, 16), avec lequel une première valeur estimée du vent actuelle est dérivée des paramètres de fonctionnement d'un premier aérogénérateur (14) et avec lequel une deuxième valeur estimée du vent actuelle est dérivée des paramètres de fonctionnement d'un deuxième aérogénérateur (15), un modèle de prédiction (28) étant appliqué afin de dériver, à partir de la première valeur estimée du vent et de la deuxième valeur estimée du vent, une prédiction de vent valide à un instant futur (25) pour un troisième aérogénérateur (16), la prédiction de vent étant traitée dans une commande (24) afin de générer un signal de commande actif avant l'instant futur (25) pour le troisième aérogénérateur (16), et le modèle de prédiction (28), en cas de changement de la direction du vent, déterminant l'intervalle de temps entre l'instant actuel et l'instant futur en tant que somme d'un temps de retard, qui est dérivé de la vitesse actuelle du vent, et d'un temps supplémentaire, qui représente un fonctionnement par inertie du premier aérogénérateur (14) et/ou du deuxième aérogénérateur (15).

2. Procédé selon la revendication 1, **caractérisé en ce que** le modèle de prédiction représente la prédiction de vent dans un système de coordonnées géographique.

3. Procédé selon la revendication 2, **caractérisé en ce que** le lieu du troisième aérogénérateur (16) est défini par des coordonnées au sein du système de coordonnées géographique.

4. Procédé selon l'une des revendications 1 à 3, **caractérisé en ce que** le signal de commande provoque une consommation de puissance réduite issue du vent par le troisième aérogénérateur (16).

5. Procédé selon l'une des revendications 1 à 4, **caractérisé en ce que** le procédé n'est actif que lorsque la vitesse du vent actuelle est supérieure à la vitesse du vent nominale et/ou le troisième aérogénérateur (16) fonctionne actuellement à la puissance nominale.

6. Procédé selon l'une des revendications 1 à 5, **caractérisé en ce que** le modèle de prédiction (28) dérive la vitesse, à laquelle une ligne de front (22) d'un champ de vent se rapproche du troisième aérogénérateur, de la première valeur estimée du vent et/ou de la deuxième valeur estimée du vent.

7. Procédé selon l'une des revendications 1 à 6, **caractérisé en ce que** le modèle de prédiction (28) comporte un modèle de fonctionnement par inertie (29) conformément auquel le fonctionnement par inertie (30) s'étend à mesure que la distance de l'aérogénérateur (14, 15) augmente.

8. Procédé selon l'une des revendications 1 à 7, **caractérisé en ce qu'**il est mis en œuvre avec nombre plus grand d'aérogénérateurs (14, 15, 16).

9. Procédé selon l'une des revendications 1 à 8, **caractérisé en ce qu'**une séquence de valeurs estimées du vent, lesquelles sont déterminées à des instants différents, est mémorisée pour chaque aérogénérateur (14, 15, 16) participant.

10. Procédé selon la revendication 8 ou 9, **caractérisé en ce que** les valeurs estimées du vent obtenues avec un premier groupe d'aérogénérateurs (14, 15) sont utilisées pour créer une prédiction de vent valide à un instant futur (25) pour un troisième groupe d'aérogénérateurs (16) .

11. Procédé selon la revendication 10, **caractérisé en ce que** l'affectation d'un aérogénérateur au premier groupe ou au deuxième groupe est modifiée en fonction de la direction du vent (18) et/ou en fonction de l'instant futur (25) auquel s'applique la prédiction de vent.

12. Système de commande, comprenant un dispositif de détection, qui est conçu pour dériver une première valeur estimée du vent actuelle à partir des paramètres de fonctionnement d'un premier aérogénérateur (14) et dériver une deuxième valeur estimée du vent actuelle à partir des paramètres de fonctionnement d'un deuxième aérogénérateur (15), et comprenant un modèle de prédiction, qui est conçu pour dériver, à partir de la première valeur estimée du vent et de la deuxième valeur estimée du vent, une prédiction de vent valide à un instant futur (25) pour un troisième aérogénérateur (16), **caractérisé en ce qu'**en cas de changement de la direction du vent, l'intervalle de temps entre l'instant actuel et l'instant futur est déterminé en tant que somme d'un temps de retard, qui est dérivé de la vitesse actuelle du vent, et d'un temps supplémentaire, qui représente un fonctionnement par inertie du premier aérogénérateur (14) et/ou du deuxième aérogénérateur (15), la prédiction de vent étant traitée dans le système de commande (21, 24) afin de générer un signal de commande actif avant l'instant futur (25) pour le troisième aérogénérateur (16) .
